# EUROPEAN PATENT APPLICATION

(11) **EP 3 192 726 A1**
(43) Date of publication of application: **19.07.2017**
(21) Application number: 17151731.1
(22) Date of filing: 17.01.2017
(51) Int. Cl.: B62H 5/00

(54) **LOCK, AND A VEHICLE COMPRISING A SPOKED WHEEL AND SAID LOCK**

(30) Priority: 18.01.2016 NL 2016109
(71) Applicant: Mobilock B.V., 1322 AC Almere (NL)
(72) Inventor: MARKVOORT, Hendrikus Cornelis, 3583AB Utrecht (NL)
(74) Representative: Altenburg, Bernardus Stephanus Franciscus

(57) **Abstract**

Lock (100) for a vehicle comprising a spoked wheel such as a bicycle, said lock (100) comprising
- a base (110), said base (110) comprising an arm,
- a locking pin,
- a bolt (280) for locking the locking pin in a locked state of the lock (100).

To make it harder to break the lock (100) open, the base (110) comprises
- a shell (160) as a housing (160), and
- a cover plate (170) for closing the shell (160), said cover plate (170)
- having a main plane, and
- comprising a lip transverse to said main plane, said lip comprising a catch for engaging the locking pin in a closed state of the lock (100).

## Description

The present invention relates to lock for a vehicle comprising a spoked wheel, said lock comprising
- a base, said base comprising an arm,
- a locking pin,
- a bolt for locking the locking pin in a locked state of the lock;
wherein the arm comprises at a distal end thereof a through hole for receiving the locking pin, and
the lock comprises
- a flexible link, said flexible link comprising a
   - a first end attached to the base, and
   - a second end provided with the locking pin.

The invention relates to a lock according to the preamble, the vehicle usually being a bicycle which may be a pedal-powered bicycle or with an auxiliary motor, such as an electric bike. The vehicle may have three or four wheels, but will in general have two wheels, at least one of which comprises spokes. To use the lock, it is permanently mounted to the frame of the vehicle, e.g. using bolts. In a mounted position, the arm will extend next to a circumferential section of the spoked wheel substantially towards the axis of rotation of the wheel. The locking pin can be in a first non-locking position and a second locking position. In the latter case, the locking pin extends transversely to the arm at a distal end of said arm between the spokes of the wheel, as a result of which the wheel no longer can rotate. The bolt will engage the locking pin, as a result of which the lock is in a locked state and the risk of theft of the vehicle is reduced. The bolt is for example a spring-loaded bolt, the spring maintaining the bolt in the locking position.

EP1623914 provides a lock according to the preamble for conveniently securing the lock to an outside object, which may be a lamp post.

The object of the present invention is to provide a lock with improved resistance to breaking the lock open.

To this end, lock according to the preamble is characterized in that the base comprises
- a shell as a housing, said shell comprising the through hole for receiving the locking pin, and
- a cover plate for closing the shell, said cover plate
   - having a main plane, and
   - comprising a lip transverse to said main plane, said lip comprising a catch for engaging the locking pin in a closed state of the lock.

This makes it harder to break the lock open. The catch is for example a hook or an eye. In a locked state of the lock, the locking pin is received by the catch, and thus provides a means for keeping the cover and the shell together when the lock is in the locked state.

The flexible link allows the vehicle to be conveniently secured to a fence, a pole such as a lamp post etc. The flexible link is for example a chain, a cable or an articulated rod. Such a lock is relatively easy to operate because no separate flexible link such as a chain has to be handled. A user only has to operate one end of the flexible link because the other end is already attached to the lock, and to close the lock it may suffice to insert the locking pin into the through hole of the arm as the only operation. The locking pin itself give good grip for the user, even the user has cold hands.

Unlocking the lock may be done in any manner known in the art, mechanically using a key or using an actuator, e.g. using a solenoid; to move the bolt, usually against the action of a spring that keeps the bolt and hence the lock in a locked state, to an unlocked position.

According to a favourable embodiment, the flexible link is a flexible link capable of retaining its shape.

Thus the flexible link will not hit the frame or the leg of the user of the vehicle during riding. The flexible link is for example an articulated rod and preferably a resilient cable (e.g. coiled). In the latter case the user does not have to spend time of folding the flexible link neatly. In case of a chain, the chain may comprise magnets allowing it to retain a compact shape.

According to a favourable embodiment, the base comprises a compartment for housing the locking pin in the unlocked state of the lock.

Thus the user does not have to waste much time before he can be on his way. The locking pin may be kept in place mechanically using a clamp, a magnet etc.

According to a favourable embodiment, the base comprises a sensor for detecting the presence of the locking pin.

The sensor is for example a an electrical switch. It may also be a magnetic sensor, in which case the locking pin may comprise a magnet. Such a switch allows for a myriad of possibilities. For example it is possible to measure how long the vehicle is used; when it is in use etc. This information may be transmitted to a central location, e.g. using an app on the phone of the user. Conversely, it allows a user to rent a bike using an app, where the app will register the desire of the user to rent a bike, and unlock a bike for the user. The sensor may for example be in the compartment.

According to a favourable embodiment, the base comprises a cast housing.

The cast housing may for example comprise a shell made by lost wax casting. Such a shell is very strong, also because a large wall thickness may be chosen such as at least 4 mm, and allows for a complicated structure. The cast housing may be closed with a cover plate.

According to a favourable embodiment, the lock comprises a further arm, wherein
- the arm and the further arm define a space for receiving a circumferential section of the spoked wheel, and
- the further arm comprises a recess for receiving the distal end of the locking pin.

Thus a very sturdy lock is provided.

According to a favourable embodiment, the cover plate provides at the further arm a further lip comprising a catch for engaging the locking pin in a closed state of the lock.

This makes it harder to separate the cover plate and the shell when the lock is in a locked state.

According to a favourable embodiment, the bolt is housed in the arm.

Thus even if the locking pin is cut by a thief at the side of the further arm, the lock will remain in the locked state.

According to a favourable embodiment, the lock comprises a spring for pushing the locking pin in a direction that is opposite to the direction of insertion.

Thus once the bolt is disengaged to unlock the lock, the spring pushes the locking pin outwardly, preventing the bolt from engaging the locking pin. Thus, the bolt needs to be activated only very briefly, which is in particular beneficial for electronic locks because less energy is spent unlocking the lock. Even for mechanical locks the operation of the lock is facilitated. The spring is advantageously in the second arm, engaging the distal end of the locking pin.

Finally, the present invention relates to vehicle comprising a spoked wheel and a lock, wherein the lock is a lock according to any of the claims 1 to 9.

Such a vehicle can be locked securely. The invention relates to a vehicle in all the embodiments discussed in the subclaims for the lock, repetition of said subclaims being abstained from for the sake of brevity only.

The present invention will now be illustrated with reference to the drawing where
Fig. 1A to 1C show a perspective view, a side view and a rear view of a lock according to the invention;
Fig. 2A to Fig. 2C show a first perspective cut-away view with a locking pin, a second perspective cut-away view without the locking pin, and a bottom cut-away view; and
Fig. 3A and Fig. 3B show a perspective view on a shell that substantially corresponds to the shell of the lock of Fig. 1A.

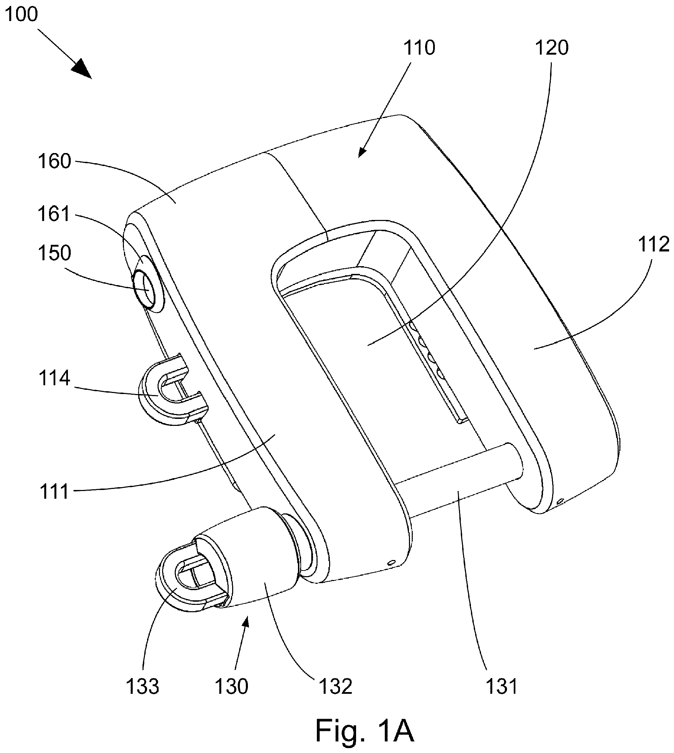

Fig. 1A to 1C show a perspective view, a side view and a rear view of a lock 100 according to the invention. The lock 100 comprises a base 110 comprising a first arm 111 and a second arm 112. The base 110 defines a space 120 for receiving a circumferential section of a spoked wheel, such as a bicycle wheel.

At a distal end of the first arm 111 a through-hole is provided for receiving a locking pin 130 comprising a pin 131 and a head 132. The head 132 comprises a first eye 133 for a flexible link (not shown) such as a chain. The other end of the flexible link is attached to a second eye 114 of the base 110.

The lock 100 will be permanently attached to a vehicle such as a bicycle, in particular to the frame thereof such that the spoked wheel is partially received in the space 120, as is very common in the art. To this end the lock 100 comprises a mounting plate 140. In the embodiment shown, it is provided with a series of pairs of slots 141 to accommodate for various frame types of bicycles. It can be attached using bolts 142.

When it is desired to lock the vehicle, the pin 131 of the locking pin 130 is inserted into the through hole of the first arm 111. The lock of this embodiment is an electronic lock, requiring no key. Electronic locks are known in the art and their operation does not require further elucidation.

In this embodiment, the base 110 comprises a cast housing 160 (shell 160), a cover plate 170. The mounting plate 140 is fixed to the cover plate 170.

In this embodiment, the base 110 comprises a compartment 150 for housing the locking pin 130 in the unlocked state of the lock 100 when the vehicle is in use.

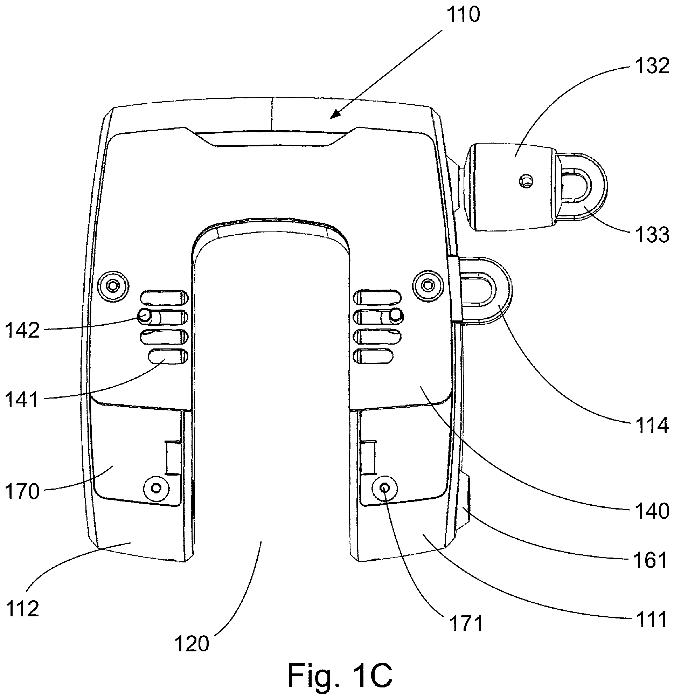

Fig. 1C shows the locking pin 130 housed in the compartment 150. The cover plate 170 is secured to the housing 160 using fasteners 171.

Fig. 1A to Fig. 1C show plastic inserts 161 provided on the first arm 111 of the shell 160 allowing the insertion of the pin 131.

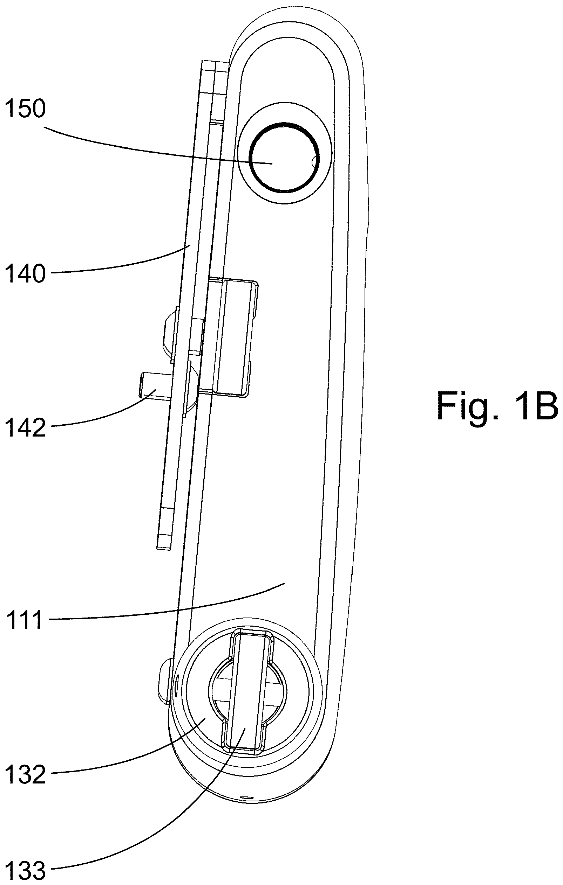

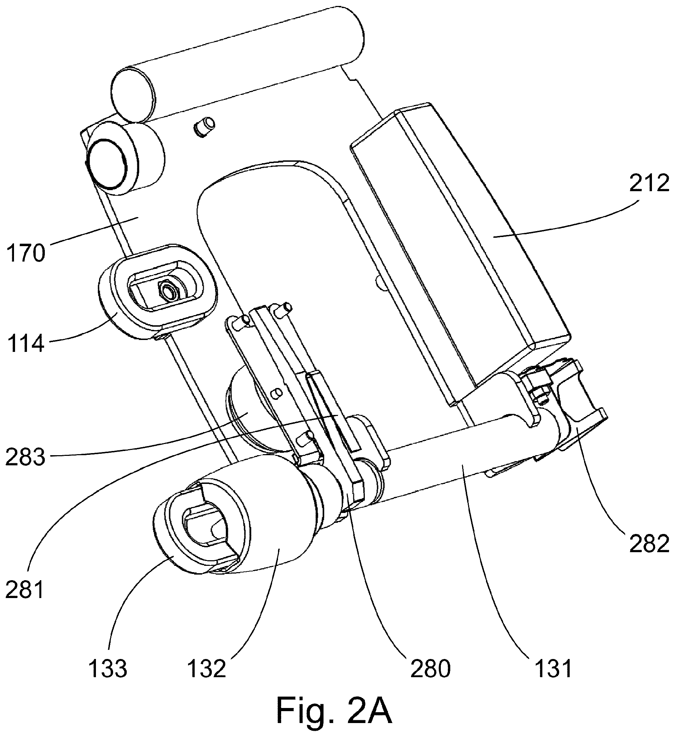

Fig. 2A to Fig. 2C show a first perspective cut-away view with the locking pin 130, a second perspective cut-away view without the locking pin 130, and a bottom cut-away view of the lock 100 of Fig. 1, the shell 160 being removed.

To secure the locking pin 130 once inserted into through opening 211 of the first arm 111, the pin 131 comprises a neck 231 capable of receiving the distal end of a bolt 280. In the present application, the term bolt comprises any means for keeping the lock 100 in a locked state by engaging the locking pin 130. The bolt 280 is pushed into the neck 231 by a leaf spring 281.

In this embodiment, the lock 100 comprises a solenoid 283 to actuate the bolt 280 if it is desired to bring the lock 100 to an unlocked state.

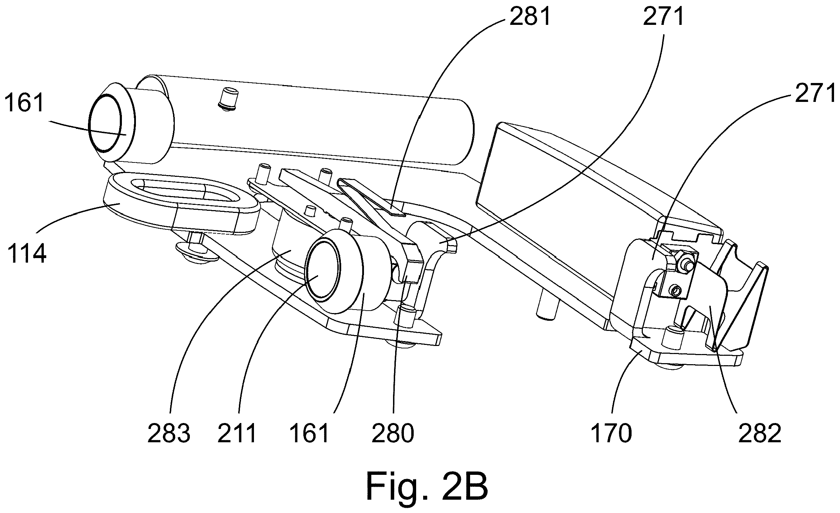

In Fig. 2B the locking pin 131 has been removed, revealing a second leaf spring 282 that is compressed when the locking pin 131 is inserted into the lock. Conversely, when the lock 100 is unlocked and the bolt 280 is not received by the neck 231, the second leaf spring 282 will push the locking pin 131 in a direction away from the second arm 112. Then the bolt 280 cannot be received by the neck 231. Thus the solenoid has to be activated only very briefly, saving energy from battery 212.

The cover plate 170 comprises hook-shaped catches 271 formed by bending, said catches 271 making it harder to break the lock 100 open as the catches hook behind the pin 131.

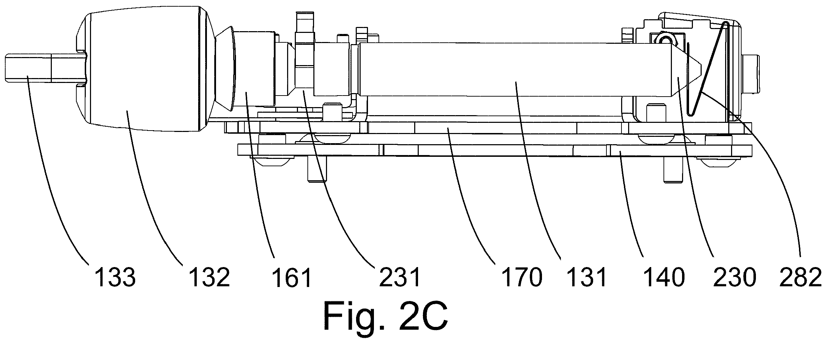

In the embodiment shown in Fig. 2C as a cut-away bottom view, the locking pin 130 has a tapered (conical) distal end 230, which allows the bolt 280 to be lifted against the pressure by the leaf spring 281 when the locking pin 131 is inserted into the lock 100.

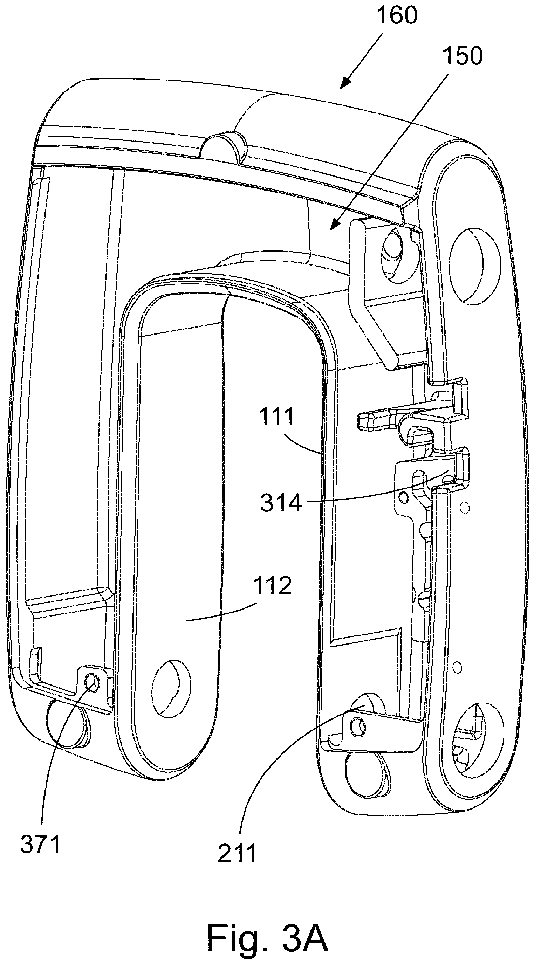

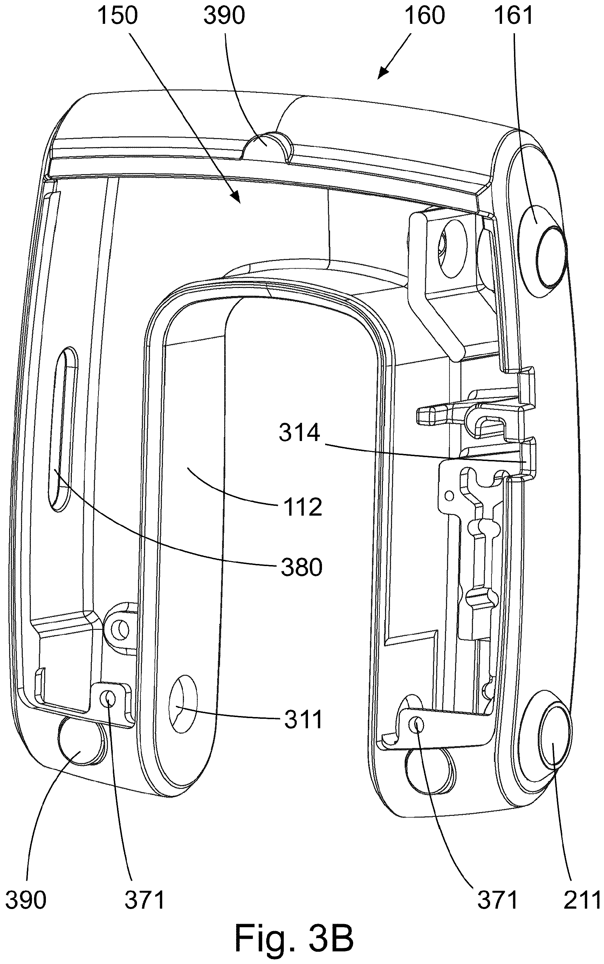

Fig. 3A and Fig. 3B show a perspective view on a shell 160 of the lock of Fig. 1A, or more specifically a shell 160 that substantially corresponds to said shell 160. The through-opening 211 of the first arm 111 and the compartment 150 have been provided with plastic inserts 161 (Fig. 3B) allowing the insertion of the pin 131.

The shell 160 comprises threaded holes 371 for receiving fasteners 171 to fasten the cover plate 170 to the shell 160. Fasteners 171, in particular bolts or screws that can be turned conveniently one way only, are known in the art.

The first arm 111 of the shell 160 shown in Fig. 3 comprises slots 314 for the second eye 114.

The second arm 112 comprises a recess 311 for receiving the distal end 230 of the locking pin 130. A second lip 271 comprising a catch (see Fig. 2B) further improves the resistance against breaking open of the lock while the locking pin 130 is in place (received in the recess 311, i.e. when lock 100 is locked. Thus the shell 160 defines the two arms 111, 112, the through-hole 211 being in the part of the shell 160 defining the first arm 111 and the recess 311 in the part of the shell 160 that defines the second arm 112.

The shell 160 allows the cover plate 170 to be received flush in the shell 160, making it harder to pry the lock 100 open. Ledges for achieving this are visible.

The shell 160 shown in Fig. 3 has, in contrast to the shell 160 shown in Fig. 1A, stubs 390 for mounting the unfinished cast obtained by lost wax casting, allowing for precise machining of the cast to result in the finished shell 160.

The embodiment of the shell 160 comprises a slot 380 for an antenna of a wireless system (such as Bluetooth^{™}) for communication of the lock 100, for example for bike rent purposes, tracking etc. The shell 160 is typically made of a metal (alloy) that would otherwise not transmit electromagnetic radiation from the antenna.

## Claims

1. Lock (100) for a vehicle comprising a spoked wheel, said lock (100) comprising
- a base (110), said base (110) comprising an arm,
- a locking pin (130),
- a bolt (280) for locking the locking pin (130) in a locked state of the lock (100);
wherein the arm comprises at a distal end (230) thereof a through hole for receiving the locking pin (130), and
the lock (100) comprises
- a flexible link, said flexible link comprising a
- a first end (230) attached to the base (110), and
- a second end (230) provided with the locking pin (130);
**characterized in that** the base (110) comprises
- a shell (160) as a housing (160), said shell (160) comprising the through hole (211) for receiving the locking pin (130), and
- a cover plate (170) for closing the shell (160), said cover plate (170)
- having a main plane, and
- comprising a lip (271) transverse to said main plane, said lip comprising a catch for engaging the locking pin (130) in a closed state of the lock (100).

2. Lock (100) according to claim 1, wherein the flexible link is a flexible link capable of retaining its shape.

3. Lock (100) according to claim 1 or 2, wherein the base (110) comprises a compartment (150) for housing (160) the locking pin (130) in the unlocked state of the lock (100).

4. Lock (100) according to any of the preceding claims, wherein the base (110) comprises a sensor for detecting the presence of the locking pin (130).

5. Lock (100) according to any of the preceding claims, wherein the base (110) comprises a cast housing (160).

6. Lock (100) according to any of the preceding claims, wherein the lock (100) comprises a further arm (112), wherein
- the arm (111) and the further arm (112) define a space (120) for receiving a circumferential section of the spoked wheel, and
- the further arm (112) comprises a recess (311) for receiving the distal end (230) of the locking pin (130).

7. Lock (100) according to claim 6, wherein the cover plate (170) provides at the further arm (112) a further lip (271) comprising a catch for engaging the locking pin (130) in a closed state of the lock (100).

8. Lock (100) according to any of the claims 6 or 7, wherein the bolt (280) is housed in the arm (111).

9. Lock (100) according to any of the preceding claims, wherein the lock (100) comprises a spring (282) for pushing the locking pin (130) in a direction that is opposite to the direction of insertion.

10. Vehicle comprising a spoked wheel and a lock (100), **characterized in that** the lock (100) is a lock (100) according to any of the claims 1 to 9.
